# EUROPEAN PATENT APPLICATION

(11) **EP 4 765 226 A1**
(43) Date of publication of application: **24.06.2026**
(21) Application number: 25787054.3
(22) Date of filing: 28.03.2025
(51) Int. Cl.: H01M 4/131, H01M 4/62, H01M 10/42, H01M 10/052, H01M 50/491, H01M 50/449, H01M 4/02

(54) **LITHIUM SECONDARY BATTERY**

(30) Priority: 09.04.2024 KR 20240048055
(71) Applicant: LG Energy Solution, Ltd., Seoul 07335 (KR)
(72) Inventor: HA, Joo-Yeon, Daejeon 34122 (KR); LEE, Su-Rim, Daejeon 34122 (KR)
(74) Representative: Plasseraud IP
(86) International application number: PCT/KR2025/004076
(87) International publication number: WO 2025/216462

(57) **Abstract**

Provided is a lithium secondary battery including a positive electrode; a negative electrode; a separator interposed between the positive electrode and the negative electrode, and an electrolyte solution, wherein the positive electrode comprises a positive current collector; and a positive electrode active material layer formed on at least one surface of the positive current collector, the positive electrode active material layer comprising a plurality of positive electrode active material particles, a first binder polymer and first copper oxide particles (CuₓO_{y}, where x and y are natural numbers).

## Description

### TECHNICAL FIELD

The present disclosure relates to a lithium secondary battery.

This application is based on and claims priority from Korean Patent Application No. 10-2024-0048055 filed on April 9, 2024 with the Korean Intellectual Property Office, the disclosure of which is incorporated herein in its entirety by reference.

### BACKGROUND

With technology development and growing demand for mobile devices, the demand for secondary batteries as an energy source is rapidly increasing. In particular, lithium secondary batteries are available on the market and used in a wide range of applications due to high energy density and operating potential, long cycle life and low self-discharge rate.

However, lithium secondary batteries have fire and explosion hazards when exposed to high temperature. When a large current flows in a short time due to factors such as overcharging, external short circuits, nail penetration and local crush, as batteries are heated due to infrared (IR) heating, the fire and explosion hazards increase. That is, when the battery temperature increases, electrolyte-electrode reactions are accelerated, generating reaction heat, and as a consequence, temperature rises further and reactions proceed faster. This cyclical process may cause thermal runaway involving rapid temperature rise of lithium secondary batteries, and when the battery temperature is higher than a certain temperature, there is a higher risk for fires. In addition, during electrolyte-electrode reactions, gas can be produced and pressure in batteries rises, and when internal pressure is higher than a certain pressure, lithium secondary batteries may explode. The fire and explosion hazards are one of the most fatal short comings of lithium secondary batteries.

Meanwhile, a battery module may include a plurality of lithium secondary batteries electrically connected to each other and a module case accommodating them. In this instance, each lithium secondary battery included in the battery module is referred to as a battery cell, and a plurality of battery modules may be connected to form a battery pack. However, when the battery pack includes the plurality of battery modules and each battery module includes the plurality of battery cells, the battery pack or the battery module may be vulnerable to thermal chain reactions between battery modules or battery cells. For example, when thermal runaway occurs in any battery module, heat may propagate to the other battery modules or battery cells. Accordingly, it is necessary to suppress the propagation of thermal runaway between battery modules or battery cells. When the propagation of thermal runaway is not properly suppressed, there is a risk that the thermal runaway in the specific battery module or battery cell may cause thermal reactions in the other battery modules or battery cells, leading to explosions or fires. In particular, in the event of thermal runaway, gas produced by electrolyte-electrode reactions in the battery cell, especially hydrogen gas may increase the internal pressure, and due to explosive potential of hydrogen gas, there is a higher risk for explosions, which accelerates the propagation of thermal runaway.

Accordingly, there is a need to effectively remove gas produced in a battery cell to prevent or slow down explosion of lithium secondary batteries and suppress thermal propagation between battery cells in the event of thermal runaway.

### DISCLOSURE

### Technical Problem

The present disclosure is directed to providing a lithium secondary battery for preventing or slowing down thermal propagation between battery cells by removing hydrogen gas produced in the event of thermal runaway.

The present disclosure is further directed to providing a lithium secondary battery including copper oxide to prevent thermal propagation and provide high capacity characteristics.

However, the technical problems to be solved by the present disclosure are not limited to the aforementioned problems, and these and other problems will be clearly understood by those skilled in the art from the following description.

### Technical Solution

To achieve the above-described objective, according to an aspect of the present disclosure, there is provided a lithium secondary battery of the following embodiment.

According to a first embodiment, provided is the lithium secondary battery including a positive electrode; a negative electrode; a separator interposed between the positive electrode and the negative electrode, and an electrolyte solution, wherein the positive electrode comprises a positive current collector; and a positive electrode active material layer formed on at least one surface of the positive current collector, the positive electrode active material layer comprising a plurality of positive electrode active material particles, a first binder polymer and first copper oxide particles (CuₓO_{y}, where x and y are natural numbers).

According to a second embodiment, in the first embodiment, the positive electrode may further include a first porous support, and the first copper oxide particles may be supported on the first porous support.

According to a third embodiment, in the second embodiment, a D₅₀ of the first porous support may range from 100 nm to 5,000 nm.

According to a fourth embodiment, in any one of the second and third embodiments, the first porous support may include zeolite, a porous metal oxide, a metal organic framework, a molecular sieve, Al-MCM-41, or two or more of them.

According to a fifth embodiment, in any one of the first to fourth embodiments, the first copper oxide particles may include copper (I) oxide (Cu₂O), copper (II) oxide (CuO), or two or more of them.

According to a sixth embodiment, in any one of the first to fifth embodiments, the first copper oxide particles may be included in an amount of 0.02 to 6.4 parts by weight based on 100 parts by weight of the positive electrode active material particles.

According to a seventh embodiment, in any one of the first to sixth embodiments, a D₅₀ of the first copper oxide particles may range from 1 nm to 500 nm.

According to an eighth embodiment, in any one of the first to seventh embodiments, the separator may include a porous polymer substrate; and at least one inorganic coating layer on at least one surface of the porous polymer substrate, the inorganic coating layer including a second binder polymer and second copper oxide particles (CuₓO_{y}, where x and y are natural numbers).

According to a ninth embodiment, in the eighth embodiment, the inorganic coating layer may further include a second porous support, and the second copper oxide particles may be supported on the second porous support.

According to a tenth embodiment, in the ninth embodiment, the second porous support may include zeolite, a porous metal oxide, a metal organic framework, a molecular sieve, Al-MCM-41, or two or more of them.

According to an eleventh embodiment, in any one of the eighth to tenth embodiments, the second copper oxide particles may include copper (I) oxide (Cu₂O), copper (II) oxide (CuO), or two or more of them.

According to a twelfth embodiment, in any one of the eighth to eleventh embodiments, the inorganic coating layer may further include inorganic particles.

According to a thirteenth embodiment, in any one of the eighth to twelfth embodiments, the first copper oxide particles may be included in an amount of 0.01 to 6.4 parts by weight based on 100 parts by weight of the positive electrode active material particles.

According to a fourteenth embodiment, in any one of the eighth to thirteenth embodiments, the inorganic coating layer may be formed on two surfaces of the porous polymer substrate.

According to a fifteenth embodiment, provided is a battery pack including the lithium secondary battery of any one of the first to fourteenth embodiments.

### Advantageous Effects

The lithium secondary battery according to an embodiment of the present disclosure may prevent or slow down thermal propagation between battery cells by removing hydrogen gas produced in the event of thermal runaway.

The lithium secondary battery according to an embodiment of the present disclosure may efficiently remove hydrogen gas with even a small amount of copper oxide particles by using the porous support.

The lithium secondary battery according to an embodiment of the present disclosure may achieve high battery capacity and low cell resistance, and an outstanding capability to prevent thermal propagation between battery cells.

However, the effects that can be obtained through the present disclosure are not limited to the aforementioned effects, and these and other technical effects will be clearly understood by those skilled in the art from the following description.

### BEST MODE

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

### <Definition>

The terms "comprise", "include" and "have" when used in this specification, specify the presence of the stated elements, but do not preclude the presence or addition of one or more other elements, unless the context clearly indicates otherwise.

In this specification, A and/or B refers to either A or B or both.

In this specification, D₅₀ refers to a particle size at 50% point of cumulative particle size distribution. That is, D₅₀ refers to a particle size at 50% point of cumulative particle size distribution. Additionally, D₁₀ refers to a particle size at 10% point of cumulative particle size distribution, and D₉₀ refers to a particle size at 90% point of cumulative particle size distribution. The particle size may be measured using a laser diffraction method. Specifically, the particle size distribution is calculated by dispersing a target powder in a dispersion medium, feeding it into a commercially available laser diffraction particle size measurement device (for example, Microtrac S3500) and measuring a difference in diffraction pattern according to particle size when particles pass through a laser beam. D₁₀, D₅₀ and D₉₀ may be measured by calculating particle diameters at 10% point, 50% point and 90% point of cumulative particle size distribution in the measurement device, respectively.

In this specification, certain terms are provided for convenience of description but not intended to limit the present disclosure. The terms 'left', 'right', 'up' and 'down' as used herein may indicate directions in the drawings to which reference is made and should not be limiting. These terms include the listed words, their derivatives and words of similar meanings.

### <Lithium secondary battery>

The present disclosure provides a lithium secondary battery.

According to an aspect of the present disclosure, the lithium secondary battery of the present disclosure includes a positive electrode; a negative electrode; a separator interposed between the positive electrode and the negative electrode; and an electrolyte solution, wherein the positive electrode comprises a positive current collector; and a positive electrode active material layer formed on at least one surface of the positive current collector, the positive electrode active material layer comprising a plurality of positive electrode active material particles, a first binder polymer and first copper oxide particles (CuₓO_{y}, where x and y are natural numbers).

Below is a detailed description.

### Positive electrode

In an embodiment of the present disclosure, the first copper oxide particles may have Chemical Formula of CuₓO_{y}, and in this instance, x and y may have natural numbers.

In an embodiment of the present disclosure, the first copper oxide particles (CuₓO_{y}) may include copper(I) oxide (Cu₂O), copper(II) oxide (CuO), or two or more of them.

In an embodiment of the present disclosure, the first copper oxide particles (CuₓO_{y}) react with hydrogen to produce solid copper metal and water. Specifically, at high temperature at which thermal runaway occurs, for example, 200°C or higher, 300°C or higher, or 400°C or higher, the copper oxide particles (CuₓO_{y}) react with hydrogen gas to produce copper metal and water vapor. Specifically, reduction reaction of copper (I) oxide (Cu₂O) with hydrogen gas may be represented by Chemical Equation 1 below, and reduction reaction of copper (II) oxide (CuO) with hydrogen gas may be represented by Chemical Equation 2 below.
[Chemical Equation 1]

Cu₂O(s) + H₂(g) → 2Cu(s) + H₂O(g) ... Equation 1

[Chemical Equation 2]

CuO(s) + H₂(g) → Cu(s) + H₂O(g) ... Equation 2

Meanwhile, when copper(I) oxide (Cu₂O)and copper(II) oxide (CuO) co-exist, the reduction reaction of copper(I) oxide (Cu₂O)produces an intermediate, so the reduction reaction of copper(II) oxide (CuO) may be advantageous thermodynamically and kinetically.

As described above, because the copper oxide particles (CuₓO_{y}) of the present disclosure react with flammable hydrogen gas at high temperature at which thermal runaway occurs to produce water vapor and solid copper, hydrogen gas produced in the battery cell may be removed, thereby preventing or slowing down thermal propagation between battery cells.

In an embodiment of the present disclosure, the positive electrode may further include a first porous support, and the first copper oxide particles may be supported on the first porous support. During charging and discharging in a predetermined voltage condition, redox reactions of the first copper oxide particles (CuₓO_{y}) may occur at the positive electrode and the negative electrode. However, when the first copper oxide particles are supported on an electrical insulating material such as the porous support, this may block electrical connection, and suppress or hinder redox reactions during charging and discharging. That is, when the first copper oxide particles are supported on the first porous support, redox reactions through an external wire connected to the electrode may be suppressed or hindered, and instead, redox reactions by hydrogen gas may predominantly proceed.

In this instance, supporting the first copper oxide particles on the first porous support may refer to attaching the first copper oxide particles to pores in the first porous support.

In an embodiment of the present disclosure, the first copper oxide particles may be supported on the porous support particles in an amount of 1 wt% to 80 wt%, 10 wt% to 60 wt%, or 20 wt% to 40 wt%, based on 100 wt% of the porous support carrying the copper oxide particles. When the amount of the first copper oxide particles falls within the aforementioned range, the first copper oxide particles are sufficiently supported on the first porous support, and when the first porous support carrying the first copper oxide particles in even a small amount is used, the surface area of the first copper oxide particles may be maximized, and hydrogen gas removal effect may be improved.

In an embodiment of the present disclosure, the first porous support is a material including pores having a size of 2 nm to 50 nm, and may be referred to as a mesoporous-sized porous support.

In an embodiment of the present disclosure, the first porous support may include an electrical insulating compound. The first porous support may include, for example, zeolite, a porous metal oxide, a metal organic framework, a molecular sieve, Al-MCM-41, or two or more of them.

In an embodiment of the present disclosure, the zeolite is a porous structure made of an aluminosilicate mineral and has a three-dimensional framework structure in which SiO₄ silicon tetrahedron and AlO₄ aluminum tetrahedron are linked. The zeolite may include, for example, natural zeolites such as clinoptilolite, mordenite or Phillipsite, and synthetic zeolites such as zeolite A (LTA structure), zeolites X and Y (FAU structure) or ZSM-5 (MFI structure).

In an embodiment of the present disclosure, the porous metal oxide (PMO) is a metal oxide including nano- or micro-sized pores, and may include Al₂O₃, TiO₂, MnO₂, CuO, Cu₂O, ZnO, Fe₂O₃, Fe₃O₄, CeO₂, ZrO₂ or a combination thereof, and be produced by a sol-gel synthesis method, a template method or a self-assembly.

In an embodiment of the present disclosure, the metal-organic framework (MOF) may refer to a porous structure in which metal ions or metal clusters are connected by organic ligands. The metal-organic framework may be a three-dimensional porous network in which metal ions or metal clusters such as Zn²⁺, Cu²⁺, Fe³⁺, Zr⁴⁺or Mg²⁺ are coordinated to benzene dicarboxylate (BDC), terephthalate (TPA) or imidazole-based ligands. The metal-organic framework may include, for example, ZIF-8, HKUST-1, UiO-66 or MIL-101.

In an embodiment of the present disclosure, the molecular sieve may refer to a porous material that selectively adsorbs molecules of a specific size while allowing others to pass through, and may include, for example, carbon-based molecular sieves such as activated carbon.

In an embodiment of the present disclosure, the Al-MCM-41 may refer to a porous material such as aluminum (Al)-doped mesoporous silica (MCM-41).

In an embodiment of the present disclosure, the Al-MCM-41 may have a pore size ranging from 2 nm to 10 nm.

The porosity or pore size may be measured by using BEL JAPAN's BELSORP (BET equipment) using adsorption gas such as nitrogen, or by mercury intrusion porosimetry or capillary flow porosimetry.

In an embodiment of the present disclosure, the D₅₀ of the first porous support may range from 100 nm to 5,000 nm. When the D₅₀ of the first porous support falls within the aforementioned range, capacity for supporting the copper oxide particles (CuₓO_{y}) may be improved.

In an embodiment of the present disclosure, the D₅₀ of the porous support particles carrying the first copper oxide particles may range from 100 nm to 5,000 nm. When the D₅₀ of the porous support particles carrying the first copper oxide particles (CuₓO_{y}) falls within the aforementioned range, hydrogen gas removal capacity may be improved.

In an embodiment of the present disclosure, the porous support particles carrying the first copper oxide particles (CuₓO_{y}) may be included in the positive electrode in an amount of 0.2 wt% to 8 wt%, or 0.4 wt% to 5 wt%, based on 100 wt% of the positive electrode active material layer. When the amount of the porous support particles carrying the first copper oxide particles (CuₓO_{y}) falls within the aforementioned range, electrode capacity decline may be suppressed and hydrogen gas removal efficiency may be improved.

In an embodiment of the present disclosure, the porous support carrying the first copper oxide particles may have BET specific surface area ranging from 100 m²/g to 1,000 m²/g. When the BET specific surface area of the porous support particles carrying the first copper oxide particles falls within the aforementioned range, the contact area with hydrogen gas may be increased and hydrogen gas removal efficiency may be improved.

In an embodiment of the present disclosure, the positive current collector may generally have a thickness of 3µm to 500 µm. The positive current collector is not limited to a particular one and may include those having high conductivity without causing any chemical change in the corresponding battery. The positive current collector may include, for example, stainless steel, aluminum, nickel, titanium, calcined carbon, or aluminum or stainless steel treated with carbon, nickel, titanium or silver on the surface. The current collector may have the microtextured surface to increase the adhesion strength of the positive electrode active material, and may come in many different forms, for example, film, sheet, foil, net, porous body, foam or non-woven fabric.

In an embodiment of the present disclosure, the positive electrode active material layer is formed by mixing the positive electrode active material particles, the first binder, and optionally, a conductive material for the positive electrode active material layer in a solvent to prepare a positive electrode slurry, and applying the positive electrode slurry to the current collector. The method for manufacturing the positive electrode is widely known in the art, and its detailed description is omitted.

In an embodiment of the present disclosure, the positive electrode active material particles are not limited to a particular type and may include any material capable of reversible intercalation and de-intercalation of lithium ions. For example, the positive electrode active material particles may include at least one composite oxide comprising a metal selected from cobalt, manganese, nickel, iron or a combination thereof; and lithium.

In an embodiment of the present disclosure, the positive electrode active material particles may include, for example, compounds represented by any one of the following Chemical Formulas: LiₐA_{1-b}R_{b}D₂ (0.90 ≤ a ≤ 1.8 and 0 ≤ b ≤ 0.5); LiₐE_{1-b}R_{b}O_{2-c}D_{c} (0.90 ≤ a ≤ 1.8, 0 ≤ b ≤ 0.5, and 0 ≤ c ≤ 0.05); LiE_{2-b}R_{b}O_{4-c}D_{c} (0 ≤ b ≤ 0.5, 0 ≤ c ≤ 0.05); LiₐNi_{1-b-c}Co_{b}R_{c}D_{α} (0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z_{α} (0.90 ≤ a ≤ 1.8, 0 ≤ b ≤ 0.5, 0 ≤ c ≤ 0.05 and 0 < α < 2); LiₐNi_{1-8-c}Mn_{b}R_{c}O_{2-α}Z₂ (0.90 ≤ a ≤ 1.8, 0 ≤ b ≤ 0.5, 0 ≤ c ≤ 0.05 and 0 < α < 2); LiₐNi_{b}E_{c}G_{d}O₂ (0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}G_{c}O₂ (0.90 ≤ a ≤ 1.8, 0 ≤ b ≤ 0.9, 0 ≤ c ≤ 0.5, 0 ≤ d ≤0.5, and 0 ≤ e ≤ 0.1); LiₐNiG_{b}O₂ (0.90 ≤ a ≤ 1.8 and 0.001 ≤ b ≤ 0.1); LiₐCoG_{b}O₂ (0.90 ≤ a ≤ 1.8 and 0.001 ≤ b ≤ 0.1); LiₐMnG_{b}O₂ (0.90 ≤ a ≤ 1.8 and 0.001 ≤ b ≤ 0.1); LiₐMn₂G_{b}O₄ (0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above Chemical Formulas, A indicates Ni, Co, Mn or a combination thereof; R indicates Al, Ni, Co, Mn, Cr, Fe, Mg, Sr, V, rare earth elements or a combination thereof; D indicates O, F, S, P or a combination thereof; E indicates Co, Mn or a combination thereof; Z indicates F, S, P or a combination thereof; G indicates Al, Cr, Mn, Fe, Mg, La, Ce, Sr, V or a combination thereof; Q indicates Ti, Mo, Mn or a combination thereof; T indicates Cr, V, Fe, Sc, Y or a combination thereof; J indicates V, Cr, Mn, Co, Ni, Cu or a combination thereof.

In an embodiment of the present disclosure, the positive electrode active material particles may be in the form of a compound. When the positive electrode active material particles are a compound, the compound may have a coating layer on the surface, or the compound may be mixed with a compound having a coating layer. In the coating layer, a coating element compound may include oxide or hydroxide of the coating element, oxyhydroxide of the coating element, oxycarbonate of the coating element or hydroxycarbonate of the coating element. The compound of which the coating layer is made may be amorphous or crystalline. The coating element included in the coating layer may include Mg, Al, Co, K, Na, Ca, Si, Ti, V, Sn, Ge, Ga, B, As, Zr or a mixture thereof. The process of forming the coating layer may use any coating method for coating using the exemplary elements in the compound without adversely affecting the properties of the positive electrode active material, and the coating method may include, for example, spray coating or dipping. This is well understood by those skilled in the art, and its detailed description is omitted.

In an embodiment of the present disclosure, the positive electrode active material particles may be included in an amount of 80 to 99 parts by weight, preferably 85 to 98 parts by weight, based on the total weight of the solid content of the positive electrode slurry. When the amount of the positive electrode active material particles falls within the aforementioned range, high capacity characteristics may be achieved.

In an embodiment of the present disclosure, the first binder polymer is used to assist in holding the positive electrode active material particles, the positive current collector and optionally, the conductive material for the positive electrode active material layer together, and may generally be included in an amount of 0.5 to 30 parts by weight, 1 to 25 parts by weight, or 2 to 20 parts by weight, based on the total weight of the solid content of the positive electrode slurry. The first binder polymer may include, for example, polyvinylidene fluoride (PVDF), polyvinyl alcohol (PVA), carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer(EPDM), sulfonated EPDM, styrene-butadiene rubber, fluororubber, various copolymers, or two or more of them.

In an embodiment of the present disclosure, the conductive material for the positive electrode active material layer may be included in an amount of 0.5 to 30 parts by weight, 1 to 25 parts by weight, or 2 to 20 parts by weight, based on the total weight of the solid content of the positive electrode slurry. The conductive material for the positive electrode active material layer is not limited to a particular type and may include any material having conductivity without causing any chemical change in the corresponding battery. The conductive material for the positive electrode active material layer may include, for example, graphite; carbon-based materials such as carbon black, acetylene black, Ketjen black, channel black, furnace black, lamp black or thermal black; conductive fibers such as carbon fibers or metal fibers; fluorocarbon; metal powders such as aluminum or nickel powders; conductive whiskers such as zinc oxide or potassium titanate; conductive metal oxides such as titanium oxide; carbon nanotubes; or conductive materials such as polyphenylene derivatives. Specific examples of commercially available conductive materials may include acetylene black-based products (Chevron Chemical Company), Denka black (Denka Singapore Private Limited), products from Gulf Oil Company, Ketjenblack, EC-based products(Armak Company), Vulcan XC-72 (Cabot Company), Super P (Timcal), or two or more of them.

In an embodiment of the present disclosure, the positive electrode slurry may further include a dispersant for the positive electrode active material layer, if necessary.

In an embodiment of the present disclosure, the dispersant for the positive electrode active material layer is not limited to a particular type and may include any type of dispersant used in the positive electrode. For example, an aqueous dispersant or an organic dispersant may be selectively used as needed. Preferably, the dispersant for the positive electrode active material layer may include any one of cellulose-based compounds, polyalkylene oxide, polyvinyl alcohol, polyvinylpyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N- dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymer, acrylonitrile/styrene/acrylic ester (ASA) polymer, a mixture of an acrylonitrile/styrene/acrylic ester (ASA) polymer and propylene carbonate, styrene/acrylonitrile (SAN) copolymer, methyl methacrylate/acrylonitrile/butadiene/styrene (MABS) polymer, styrene butadiene rubber, nitrile butadiene rubber, fluororubber and hydrogenated nitrile butadiene rubber (H-NBR),or a mixture thereof. When the positive electrode composition further includes the dispersant, the dispersion of the components of the positive electrode composition, particularly the conductive material may be enhanced, but is not limited thereto.

In an embodiment of the present disclosure, the solvent may include any commonly used solvent. The solvent may include, for example, dimethylsulfoxide (DMSO), isopropyl alcohol, N-methylpyrrolidone (NMP), acetone or water, used singly or in combination. The solvent is used in a sufficient amount to dissolve or disperse the positive electrode active material particles, the conductive material for the positive electrode active material layer and the first binder in view of the coating thickness and production yield of the positive electrode slurry, and achieve a desired viscosity for thickness uniformity in the subsequent coating process for the manufacture of the positive electrode.

In an embodiment of the present disclosure, the amount of the first copper oxide particles (CuₓO_{y}) may range from 0.02 to 6.4 parts by weight, from 0.04 to 6 parts by weight, from 0.04 to 5.5 parts by weight, from 0.08 to 5 parts by weight, or from 0.1 to 4 parts by weight, based on 100 parts by weight of the positive electrode active material particles. When the amount of the first copper oxide particles (CuₓO_{y}) falls within the aforementioned range, battery cell capacity may be improved, an increase in battery cell resistance may be minimized and thermal propagation between battery cells may be prevented.

In an embodiment of the present disclosure, the porous support particles carrying the first copper oxide particles (CuₓO_{y}) may be included in the positive electrode in an amount of 0.2 wt% to 8 wt%, or 0.4 wt% to 5 wt%, based on 100 wt% of the positive electrode active material layer. When the amount of the porous support particles carrying the first copper oxide particles (CuₓO_{y}) falls within the aforementioned range, electrode capacity decline may be suppressed and hydrogen gas removal efficiency may be improved.

In an embodiment of the present disclosure, the D₅₀ of the first copper oxide particles (CuₓO_{y})may range from 1 nm to 500 nm. The D₅₀ of the first copper oxide particles may be adjusted according to the pore size of the porous support, and when theD₅₀ of the first copper oxide particles falls within the aforementioned range, hydrogen removal efficiency may be improved due to the increased specific surface area.

In an embodiment of the present disclosure, the first copper oxide particles (CuₓO_{y}) may have BET surface area of 50 m²/g to 500 m²/g. When the BET surface area of the first copper oxide particles (CuₓO_{y}) falls within the aforementioned range, hydrogen gas removal efficiency may be improved due to the wide contact area with hydrogen gas.

### Separator

In an embodiment of the present disclosure, the separator may include a porous polymer substrate; and at least one inorganic coating layer on at least one surface of the porous polymer substrate and including a second binder polymer and second copper oxide particles (CuₓO_{y}, where x and y are natural numbers).

In an embodiment of the present disclosure, the second copper oxide particles may have Chemical Formula of CuₓO_{y}, and in this instance, x and y may have natural numbers.

In an embodiment of the present disclosure, the second copper oxide particles (CuₓO_{y}) may include copper (I) oxide (Cu₂O), copper (II) oxide (CuO), or two or more of them.

In an embodiment of the present disclosure, the second copper oxide particles may be the same as the first copper oxide particles, and the description of the second copper oxide particles is replaced with the description of the first copper oxide particles described above.

When the copper oxide particles are formed on the contact surface with the negative electrode, the copper oxide particles may be reduced by reactions as shown in the following Chemical Equation at the contact surface with the negative electrode during charging and discharging of the battery.

CuO + 2Li → Cu + Li₂O (1.4V vs Li/Li⁺)

Cu₂O + 2Li → 2Cu + Li₂O (1.6V vs Li/Li⁺)

The reduction reaction results in the conversion into copper metal and lithium oxide and deposition on the negative electrode, causing side reactions, which have an adverse effect on the battery.

In an embodiment of the present disclosure, the inorganic coating layer may further include a second porous support, and the second copper oxide particles may be supported on the second porous support. When the second copper oxide particles are supported on an electrical insulating material such as the porous support, this may block electrical connection, and suppress or hinder redox reactions during charging and discharging. That is, when the second copper oxide particles are supported on the second porous support, redox reactions through the external wire connected to the electrode may be suppressed or hindered, and instead, redox reactions by hydrogen gas may predominantly proceed.

In an embodiment of the present disclosure, the amount of the second copper oxide particles may range from 1 wt% to 80 wt%, from 10 wt% to 60 wt%, or from 20 wt% to 40 wt%, based on 100 wt% of the second porous support carrying the second copper oxide particles. When the amount of the second copper oxide particles falls within the aforementioned range, the second copper oxide particles are sufficiently supported on the second porous support, and when the second porous support carrying the second copper oxide particles in even a small amount is used, the surface area of the second copper oxide particles may be maximized, and hydrogen gas removal effect may be improved.

In an embodiment of the present disclosure, the second porous support is a material including pores having a size of 2 nm to 50 nm, and may be referred to as a mesoporous-sized porous support.

In an embodiment of the present disclosure, the second porous support may include an electrical insulating compound. The second porous support may include, for example, zeolite, porous metal oxide, a metal organic framework, a molecular sieve, Al-MCM-41, or two or more of them. The description of each compound is replaced with the above description.

In an embodiment of the present disclosure, the porous polymer substrate refers to a substrate that has pores inside and acts as a porous ion-conducting barrier to prevent electrical contact between the negative electrode and the positive electrode while allowing ions to pass through. The pores are interconnected to each other, allowing gas or liquid to pass from one side of the substrate to the other side.

The material of the porous polymer substrate may include organic or inorganic materials having electrical insulating properties. In particular, from the perspective of a shutdown function for the substrate, thermoplastic resin is a preferred material of the substrate. Here, the shutdown function refers to a function in which when the temperature of the battery rises, the thermoplastic resin melts and closes the pores of the porous substrate to stop ion migration, thereby preventing thermal runaway of the battery. The thermoplastic resin may include thermoplastic resin having the melting point of less than 200°C, and preferably, especially polyolefin.

In addition, the porous polymer substrate may further include at least one of polymer resins such as polyethylene terephthalate, polybutylene terephthalate, polyacetal, polyamide, polycarbonate, polyimide, polyether ether ketone, polyether sulfone, polyphenylene oxide, polyphenylene sulfide or polyethylene naphthalene. The porous polymer substrate may include a non-woven fabric, a porous polymer film or a laminate of two or more of them, but is not particularly limited thereto.

In an embodiment of the present disclosure, the thickness of the porous polymer substrate may range from 3 µm to 12 µm or from 5 µm to 12 µm. When the thickness of the porous polymer substrate is below the aforementioned range, the function of the conducting barrier is inadequate, and in contrast, when the thickness of the porous polymer substrate is much larger than the aforementioned range (i.e., the porous polymer substrate is very thick), the resistance of the separator may overly increase.

In an embodiment of the present disclosure, the weight average molecular weight of the polyolefin may range from 100,000 to 5,000,000. When the weight average molecular weight is less than 100,000, it may be difficult to ensure sufficient physical properties. In addition, when the weight average molecular weight is more than 5,000,000, the shutdown feature may not work properly or forming may become difficult. In addition, the puncture strength of the porous polymer substrate may be in a range of 300 gf or more to improve the production yield. The puncture strength of the porous substrate refers to the maximum puncture load (gf) measured by a puncture test in the conditions of a needle tip curvature radius of 0.5 mm and a puncture speed of 4 mm/sec using a Kato tech KES-G5 handy compression tester.

In an embodiment of the present disclosure, the porous polymer substrate may include any planar porous polymer substrate used in the electrochemical device, and for example, an insulating thin film with high ion permeability and mechanical strength, generally having the pore diameter of 10 nm to 200 nm and the thickness of 5 µm to 12 µm.

In an embodiment of the present disclosure, the inorganic coating layer is formed by mixing the second binder polymer and the second copper oxide particles in a solvent to prepare a slurry for the inorganic coating layer, and applying the slurry for the inorganic coating layer to the porous polymer substrate. The method for forming the inorganic coating layer is widely known in the art, and its detailed description is omitted.

In an embodiment of the present disclosure, the inorganic coating layer may further include inorganic particles. For example, the inorganic coating layer may be formed by mixing the inorganic particles, the second binder polymer and the second copper oxide particles in a solvent to prepare a slurry for the inorganic coating layer, and applying the slurry for the inorganic coating layer to the porous polymer substrate.

In a specific embodiment of the present disclosure, the inorganic particles are not limited to a particular one and may include any electrochemically stable one. That is, the inorganic particles that may be used in the present disclosure are not limited to a particular type and may include any type of inorganic particles in which oxidation and/or reduction reaction does not occur in the operating voltage range (for example, 0 to 5 V vs Li/Li+) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving the ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include BaTiO₃, Pb(Zr,Ti)O₃ (PZT), Pb₁₋ₓLaₓZr_{1-y}Ti_{y}O₃(PLZT, 0<x<1, 0<y<1), Pb(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate (Li₃PO₄), lithium titanium phosphate (LixTiy(PO₄)₃, 0 < x < 2 , 0 < y < 3), lithium aluminum titaniumphosphate (LiₓAl_{y}Ti_{z}(PO₄)₃, 0 < x < 2, 0 < y <1, 0 < z < 3), (LiAlTiP)ₓO_{y}-based glass(0 < x< 4 , 0 < y < 13) such as 14Li₂O-9Al₂O₃-38TiO₂-39P₂O₅, lithium lanthanum titanate (LiₓLa_{y}TiO₃, 0 < x < 2 ,0 < y < 3), lithium germanium thiophosphate (LiₓGe_{y}P_{z}S_{w}, 0 < x < 4, 0< y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, 0 < x < 3, 0 <y < 2, 0 < z < 4) such as Li₃PO₄-Li₂S-SiS₂, P₂S₅-based glass (LiₓP_{y}S_{z}, 0 < x < 3, 0< y < 3, 0 < z < 7) such as LiI-Li₂S-P₂S₅, or a mixture thereof.

In addition, the average particle size of the inorganic particles is not limited to a particular range, but preferably ranges from 0.1 µm to 1.5 µm to form the coating layer with even thickness and optimal porosity. When the average particle size of the inorganic particles is less than 0.1 µm, it may result in poor dispersion, and when the average particle size of the inorganic particles is larger than 1.5 µm, the inorganic coating layer may have the increased thickness.

In an embodiment of the present disclosure, the inorganic coating layer may include the second binder polymer to supplement the bond strength within the coating layer. The second binder polymer may be included in a range between 10 wt% and 30 wt% based on 100 wt% of the inorganic coating layer.

In an embodiment of the present disclosure, the second binder polymer may include PVdF-based polymer resin. The PVdF-based polymer resin may include at least one of a homopolymer of vinylidene fluoride (i.e., polyvinylidene fluoride), a copolymer of vinylidene fluoride and a copolymerizable monomer or a mixture thereof. In an embodiment of the present disclosure, the monomer may include, for example, a fluorinated monomer and/or a chlorinated monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxole); or perfluoro(2,2-dimethyl-1,3-dioxole) (PDD).

Along with this or independently of this, the second binder polymer may include (meth)acrylic polymer resin. The (meth)acrylic polymer includes (meth)acrylic acid ester as a monomer, and non-limiting examples of the (meth)acrylic polymer may include (meth)acrylic polymer including butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate, lauryl (meth)acrylate or tetradecyl (meth)acrylate as its monomer.

In addition, in an embodiment of the present disclosure, the inorganic coating layer may further include an additive such as a dispersing agent and/or a thickening agent in an amount ranging from 1 part by weight to 3 parts by weight, based on 100 parts by weight of the inorganic coating layer. In an embodiment of the present disclosure, the additive may include at least one selected from polyvinylpyrrolidone (PVP), polyvinylalcohol (PVA), hydroxy ethyl cellulose (HEC), hydroxy propyl cellulose (HPC), ethylhydroxy ethyl cellulose (EHEC), methyl cellulose (MC), carboxymethyl cellulose (CMC), hydroxy alkyl methyl cellulose or cyanoethylene polyvinyl alcohol. In this instance, the solvent may include any commonly used solvent, and the solvent may be the same as the solvent used in the positive electrode slurry.

In an embodiment of the present disclosure, the second copper oxide particles (CuₓO_{y}) may be included in an amount of 1 wt% to 80 wt%, based on 100 wt% of the inorganic coating layer. When the amount of the second copper oxide particles (CuₓO_{y}) falls within the aforementioned range, thermal propagation between battery cells may be prevented.

In an embodiment of the present disclosure, the D₅₀ of the second copper oxide particles (CuₓO_{y}) may range from 1 nm to 500 nm. When the D₅₀ of the second copper oxide particles falls within the aforementioned range, it may be possible to grow the particles enough to be supported on the porous support, and prevent the particles from being peeled off from the inorganic coating layer or the hydrogen removal layer.

In an embodiment of the present disclosure, the amount of the second copper oxide particles supported on the second porous support may range from 10 wt% to 90 wt%, from 20 wt % to 80 wt%, or from 30 wt% to 70 wt%, based on 100 wt% of the inorganic coating layer.

In an embodiment of the present disclosure, when the separator includes the second copper oxide particles as the inorganic particles, the amount of the first copper oxide particles in the positive electrode active material layer may range from 0.01 to 6.4 parts by weight based on 100 parts by weight of the positive electrode active material particles. That is, when the separator includes the second copper oxide particles as the inorganic particles, even though the amount of the first copper oxide particles in the positive electrode active material layer is decreased, hydrogen gas removal efficiency within the lithium secondary battery may be increased.

In an embodiment of the present disclosure, the inorganic coating layer may further include the second porous support, and when the second copper oxide particles are supported on the second porous support, the inorganic coating layer may be formed on two surfaces of the porous polymer substrate. That is, when the second copper oxide particles are electrically connected to the negative electrode, redox reactions of the copper oxide particles may occur during operation of the battery. Meanwhile, when the second copper oxide particles are supported on the second porous support which is an electrical insulating material, the second copper oxide particles may not be electrically connected to the negative electrode, and even in the presence of the second copper oxide particles in the inorganic coating layer on the surface of the porous polymer substrate that contacts the negative electrode, electrically induced redox reactions of the second copper oxide particles may not occur.

### Negative electrode

In the present disclosure, the negative electrode includes a negative current collector and a negative electrode active material layer on at least one surface of the current collector and including a negative electrode active material, a conductive material for the negative electrode active material layer and a third binder polymer. In the negative electrode, the negative electrode active material may include any one selected from lithium metal oxide, carbon such as non-graphitizing carbon or graphite-based carbon; metal composite oxide such as Li_{X}Fe₂O₃(0≤x≤1), LiₓWO₂(0≤x≤1),SnₓMe₁₋ₓMe'_{y}O_{z}(Me: Mn, Fe, Pb, Ge; Me': Al, B, P, Si, Group 1, 2and 3 elements in the periodic table, halogen; 0<x≤1; 1≤y≤3; 1≤z≤8); lithium metals; lithium alloys; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni based materials; and titanium oxide, or a mixture thereof.

In a specific embodiment of the present disclosure, the conductive material for the negative electrode active material layer may include, for example, any one selected from the group consisting of graphite, carbon black, carbon fibers or metal fibers, metal powder, conductive whiskers, conductive metal oxide, activated carbon and polyphenylene derivatives, or a mixture thereof. More specifically, the conductive material may include any one selected from the group consisting of natural graphite, artificial graphite, Super P, acetylene black, Ketjen black, channel black, furnace black, lamp black, thermal black, Denka black, aluminum powder, nickel powder, zinc oxide, potassium titanate and titanium oxide, or a mixture thereof.

The negative current collector is not limited to a particular one and may include those having high conductivity without causing any chemical change in the corresponding battery. The negative current collector may include, for example, stainless steel, copper, aluminum, nickel, titanium, calcined carbon or aluminum or stainless steel treated with carbon, nickel, titanium or silver on the surface.

The third binder polymer may include any polymer commonly used in the electrode in the corresponding field. Non-limiting examples of the third binder polymer may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxymethyl cellulose, but is not limited thereto.

### Electrolyte solution

In the present disclosure, the electrolyte solution includes a salt of A⁺B⁻ structure dissolved or dissociated in an organic solvent, wherein A⁺ includes an alkali metal cation such as Li⁺, Na⁺, K⁺ or a combination thereof, B⁻ includes an anion such as PF₆⁻, BF₄⁻, Cl⁻, Br⁻, I⁻,ClO₄⁻,AsF₆⁻, CH₃CO₂⁻, CF₃SO₃⁻, N(CF₃SO₂)₂⁻, C(CF₂SO₂)₃⁻ or a combination thereof, and the organic solvent includes at least one selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (g-butyrolactone) and ester-based compounds, but is not limited thereto.

Meanwhile, in a specific embodiment of the present disclosure, the organic solvent includes an ester-based compound, and preferably, the ester-based compound is included in an amount of 30 wt% or more, 50 wt% or more, 60 wt% or more, or 65 wt% or more, based on 100 wt% of the organic solvent.

In a specific embodiment of the present disclosure, the ester-based compound includes at least one selected from the group consisting of isobutyl propionate, isoamyl propionate, isobutyl butyrate, isopropyl propionate, methyl propionate, ethyl propionate, propyl propionate, butyl propionate, methyl acetate, ethyl acetate, propyl acetate, butyl acetate, methyl butyrate, ethyl butyrate, propyl butyrate and butyl butyrate.

In an embodiment of the present disclosure, the electrolyte solution may include an electrolyte additive, if necessary, to improve battery life characteristics, suppress battery capacity decline, and improve battery discharge capacity. Examples of the electrolyte additive include any one of haloalkylene carbonate-based compounds such as vinylene carbonate (VC), fluoroethylene carbonate (FEC) or difluoroethylene carbonate (DFEC), pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol and aluminum trichloride, or a mixture thereof, but is not limited thereto. The electrolyte additive may be, for example, included in an amount of 0.1 wt% or more and 15 wt% or less, based on the total weight of the electrolyte solution.

The present disclosure provides a battery pack including the above-described lithium secondary battery.

Hereinafter, the present disclosure will be described in more detail through examples; however, the following examples are intended to illustrate the present disclosure, and the scope of the present disclosure is not limited to these examples.

### <Preparation Example 1: Production of porous support (Al-MCM-41) particles carrying copper oxide particles (CuO)>

10 g of attapulgite (Sigma-Aldrich) was stirred at 600 rpm for 2 hours into a powder form, and mixed with 15 g of sodium hydroxide (NaOH) in a solid state. The mixed powder was heated at 600°C for 2 hours, and added to 400 mL of deionized water (DI), followed by centrifugal separation by stirring at 2,000 rpm for 16 hours at room temperature. 80 mL of the supernatant separated from the mixture by centrifugal separation, 1.0 g of cetyltrimethylammonium bromide (CTAB) and 1.0 g of polyethylene glycol (Sigma-Aldrich, polyethylene glycol 4000) were added to 50 mL of deionized water, and stirred at 200 rpm for 1 hour at 30°C. Subsequently, 2 g of CuCl₂ · 2H₂O was added to the mixture, and pH was adjusted to 9 with 2 M HCl, followed by additional stirring at 200 rpm for 1 hour at 30°C. The result was transferred to a Teflon-lined autoclave and heated at 110°C for 24 hours. Subsequently, the obtained solid was filtered and dried at 80°C for 12 hours. The drying was followed by calcination at the rate of 2°C per minute until 550°C and after maintaining the temperature at 550°C for 4 hours, porous support (Al-MCM-41) particles carrying copper oxide particles (CuO) was finally obtained, and copper oxide (CuO) loading was 10 wt% based on 100 wt% of the porous support particles.

### <Example 1>

### <Manufacture of positive electrode>

3 parts by weight of PVDF as a first binder polymer was dissolved in an acetonitrile solvent to prepare a binder solution, and 3 parts by weight of carbon black (Super C65) as a conductive material for a positive electrode active material layer was added to the binder solution to obtain a mixture solution. 93.5 parts by weight of NCM811 (LiNi_{0.8}Co_{0.1}Mn_{0.1}O₂) as a positive electrode active material and 0.5 parts by weight of particles in which copper oxide particles (CuO) are supported on a porous support (Al-MCM-41) were added to the mixture solution to obtain a positive electrode slurry having the solid content of 70 wt%. The positive electrode slurry was applied to each of two surfaces of a 20 µm-thick aluminum current collector to the thickness of 70 µm, dried at 120°C for 6 hours and roll pressed under the pressure of 10 MPa to manufacture a positive electrode having the thickness of 120 µm.

### <Manufacture of negative electrode>

95 parts by weight of natural graphite as a negative electrode active material, 3 parts by weight of styrene butadiene rubber (SBR) as a third binder polymer, 1 part by weight of carbon black (Super C65) as a conductive material for a negative electrode active material layer and 1 part by weight of carboxymethyl cellulose (CMC) as a thickening agent for a negative electrode active material layer were mixed to obtain a negative electrode slurry having the solid content of 40 wt%, and the negative electrode slurry was applied to each of two surfaces of a 10 µm-thick copper current collector to the thickness of 90 µm, dried at 100°C for 6 hours and roll pressed under the pressure of 10 MPa to manufacture a negative electrode having the thickness of 130 µm.

### <Manufacture of separator>

Alumina (Al₂O₃) as inorganic particles, an acrylic emulsion as a second binder polymer and carboxyl methyl cellulose as a dispersant for an inorganic coating layer were added to a water:ethanol 95:5 solution at the ratio of 96:2:2 and stirred to prepare a slurry for an inorganic coating layer. The prepared slurry was applied to each of two surfaces of a 15 µm-thick polypropylene porous substrate to the thickness of 5 µm and dried to prepare a separator having an inorganic coating layer.

### <Preparation of electrolyte solution>

1MLiPF₆as an electrolyte salt and 2 wt% of vinylene carbonate (VC) as an electrolyte additive were added to a mixture solvent containing ethylene carbonate (EC):ethyl methyl carbonate (EMC) at a 3:7 volume ratio.

### <Manufacture of lithium secondary battery>

The as-prepared positive electrode, negative electrode and separator were laminated in an order of separator/negative electrode/separator/positive electrode, and 30 mono-cells were stacked, and a single half-cell of separator/negative electrode/separator was additionally stacked and taped with a PET tape to manufacture a stack. Subsequently, after performing a lead welding process on the stack, the stack was placed in a pouch-type case and an activation process was performed by injecting the as-prepared electrolyte solution. The activation process was performed by charging at 0.1C for 3 hours.

### <Example 2>

A lithium secondary battery was manufactured in the same way as Example 1, except that 93.9 parts by weight of NCM811 (LiNi_{0.8}Co_{0.1}Mn_{0.1}O₂) as a positive electrode active material and 0.1 parts by weight of particles in which copper oxide particles (CuO) are supported on a porous support (Al-MCM-41) were added.

### <Example 3>

A lithium secondary battery was manufactured in the same way as Example 1, except that 84 parts by weight of NCM811 (LiNi_{0.8}Co_{0.1}Mn_{0.1}O₂) as a positive electrode active material and 10 parts by weight of particles in which copper oxide particles (CuO) are supported on a porous support (Al-MCM-41) were added.

### <Example 4>

A lithium secondary battery was manufactured in the same way as Example 1, except that particles in which copper oxide particles (CuO) as inorganic particles of a separator are supported on a porous support (Al-MCM-41), an acrylic emulsion as a second binder polymer and carboxyl methyl cellulose as a dispersant for an inorganic coating layer were added to a water:ethanol 95:5 solution at the ratio of 96:2:2 and stirred to prepare a slurry for an inorganic coating layer, and the as-prepared slurry was applied to each of two surfaces of a 15 µm-thick polypropylene porous substrate to the thickness of 5 µm and dried to prepare a separator having an inorganic coating layer.

### <Example 5>

A lithium secondary battery was manufactured in the same way as Example 4, except that 93.9 parts by weight of NCM811 (LiNi_{0.8}Co_{0.1}Mn_{0.1}O₂) as a positive electrode active material and 0.1 parts by weight of particles in which copper oxide particles (CuO) are supported on a porous support (Al-MCM-41) were added.

### <Comparative Example 1>

3 parts by weight of PVDF as a first binder polymer was dissolved in an acetonitrile solvent to prepare a binder solution, and 3 parts by weight of carbon black (Super C65) as a conductive material for a positive electrode active material layer was added to the binder solution to obtain a mixture solution, and 94 parts by weight of NCM811 (LiNi_{0.8}Co_{0.1}Mn_{0.1}O₂) as a positive electrode active material was added to the mixture solution to obtain a positive electrode slurry having the solid content of 70 wt%. The positive electrode slurry was applied to each of two surfaces of a 20 µm-thick aluminum current collector to the thickness of 70 µm, and dried at 120°C for 6 hours and roll pressed under the pressure of 10 MPa to manufacture a positive electrode having the thickness of 120 µm. That is, the positive electrode was manufactured in the same way as Example 1, except that 94 parts by weight of NCM811 (LiNi_{0.8}Co_{0.1}Mn_{0.1}O₂) was added as the positive electrode active material.

### <Experimental Example>

### Battery performance evaluation

### <Battery capacity evaluation method>

A lithium secondary battery was assembled using the positive electrode manufactured in each Example and Comparative Example as described above. Subsequently, the lithium secondary battery was cycled in the conditions of 0.33 C-rate, 4.2V, 0.05C cut-off charge in CC/CV mode and 0.033 C-rate, 2.5V cut-off discharge in CC mode for 2 cycles, and the second discharge capacity was measured. TABLE 1 below summarizes the measurement results.

### <Battery resistance evaluation method>

A lithium secondary battery was assembled using the positive electrode manufactured in each Example and Comparative Example as described above. Subsequently, the lithium secondary battery was charged at 0.33 C-rate, 4.2V, 0.05C cut-off in CC/CV mode, and discharged to 50% on the basis of 0.033 C-rate discharge capacity in CC mode, and resistance was measured at DOD50. The resistance evaluation was done by calculating the resistance from voltage changes during discharging by applying a pulse discharge current for 10 seconds after not applying an electric current for 30 seconds. TABLE 1 below summarizes the measurement results.

### <Thermal propagation measurement of battery cell>

A lithium secondary battery (battery cell) was manufactured using the positive electrode manufactured in each Example and Comparative Example, and a thermocouple was attached to the center of each of four battery cells which in turn, were adhered to each other with a double-sided tape to stack the battery cells. In this instance, for convenience of description, one outermost battery cell is referred to as battery cell #1, and the other outermost battery cell is referred to as battery cell #4. Subsequently, a heater (120 mm x 60 mm) is placed on battery cell #1, the thermocouple is attached between the heater and battery cell #1, and the heater is secured with a polyimide tape. Subsequently, Superwool 10 T insulation (300 mm x 100 mm) is applied to two sides of the battery cell stack, and the battery cell stack is placed in a SUS box (420 mm x 105 mm x 125 mm, thickness 10T), followed by sealing. Thermal runaway and its consequential thermal propagation in battery cell #1was triggered by increasing the temperature of the heater at the rate of 5°C/min, and at this time, voltage and temperature of each cell are recorded. The period of time from when battery cell #1 reaches 250°C to when battery cell #4 reaches 250°C is measured. TABLE 1 below summarizes the results.

**[TABLE 1]**

| | Example 1 | Example 2 | Example 3 | Example 4 | Example 5 | Comparative Example 1 |
|---|---|---|---|---|---|---|
| Monocell capacity (0.33 C, unit: Ah) | 39.7 | 40.1 | 31.5 | 39.5 | 40.1 | 40.2 |
| Monocell resistance (10s, DOD50, unit: mΩ) | 2.42 | 2.35 | 8.24 | 2.42 | 2.32 | 2.30 |
| Thermal propagation time of battery cell (unit: sec) | 161 | 92 | 97 | 207 | 166 | 90 |

It was confirmed that compared to Comparative Example 1, Example 1 had a small decrease in capacity and a small increase in resistance, as well as the increased thermal propagation time of the battery cell, thereby effectively slowing down thermal propagation between battery cells. Compared to Comparative Example 1, Example 2 had a small decrease in capacity and a small increase in resistance, but a practically insignificant increase in thermal propagation time between battery cells.

Compared to Comparative Example 1, Example 3 had a large decrease in capacity but a large increase in resistance, and the thermal propagation time between battery cells increased slightly due to abnormal behaviors of the battery cell.

Compared to Example 1, Example 4 including the second copper oxide particles in the separator had the increased thermal propagation time of the battery cell without a decrease in resistance and capacity of the monocell.

Compared to Example 2, Example 5 including the second copper oxide particles in the separator had the increased thermal propagation time of the battery cell without a decrease in resistance and capacity of the monocell.

In conclusion, when the positive electrode includes the predetermined amount of first copper oxide particles, the thermal propagation time of the battery cell may be increased without degradation in resistance characteristics and capacity characteristics of the monocell. In addition, when both the positive electrode and the separator include the copper oxide particles, the thermal propagation time of the battery cell may be increased with even a small amount of the copper oxide particles in the positive electrode.

Through this, it was confirmed that when the positive electrode and the separator include the predetermined amount of copper oxide particles that may cause side reactions in the lithium secondary battery in a manner that the copper oxide particles are supported on the porous support, the thermal propagation time between battery cells may be increased without degradation in capacity characteristics and resistance characteristics of the battery.

## Claims

1. A lithium secondary battery comprising:
a positive electrode; a negative electrode; a separator interposed between the positive electrode and the negative electrode, and an electrolyte solution,
wherein the positive electrode comprises:
a positive current collector; and
a positive electrode active material layer formed on at least one surface of the positive current collector, the positive electrode active material layer comprising a plurality of positive electrode active material particles, a first binder polymer and first copper oxide particles (CuₓO_{y}, where x and y are natural numbers).

2. The lithium secondary battery according to claim 1,
wherein the positive electrode further includes a first porous support, and
wherein the first copper oxide particles are supported on the first porous support.

3. The lithium secondary battery according to claim 2,
wherein a D₅₀ of the first porous support ranges from 100 nm to 5,000 nm.

4. The lithium secondary battery according to claim 2,
wherein the first porous support includes zeolite, a porous metal oxide, a metal organic framework, a molecular sieve, Al-MCM-41, or two or more of them.

5. The lithium secondary battery according to claim 1,
wherein the first copper oxide particles include copper(I) oxide (Cu₂O), copper(II) oxide (CuO), or two or more of them.

6. The lithium secondary battery according to claim 1,
wherein the first copper oxide particles are included in an amount of 0.02 to 6.4 parts by weight based on 100 parts by weight of the positive electrode active material particles.

7. The lithium secondary battery according to claim 1,
wherein a D₅₀ of the first copper oxide particles ranges from 1 nm to 500 nm.

8. The lithium secondary battery according to claim 1,
wherein the separator includes:
a porous polymer substrate; and at least one inorganic coating layer on at least one surface of the porous polymer substrate, the inorganic coating layer including a second binder polymer and second copper oxide particles (CuₓO_{y}, where x and y are natural numbers).

9. The lithium secondary battery according to claim 8,
wherein the inorganic coating layer further includes a second porous support, and
wherein the second copper oxide particles are supported on the second porous support.

10. The lithium secondary battery according to claim 9,
wherein the second porous support includes zeolite, a porous metal oxide, a metal organic framework, a molecular sieve, Al-MCM-41, or two or more of them.

11. The lithium secondary battery according to claim 8,
wherein the second copper oxide particles include copper(I) oxide (Cu₂O), copper(II) oxide (CuO), or two or more of them.

12. The lithium secondary battery according to claim 8,
wherein the inorganic coating layer further includes inorganic particles.

13. The lithium secondary battery according to claim 8,
wherein the first copper oxide particles are included in an amount of 0.01 to 6.4 parts by weight based on 100 parts by weight of the positive electrode active material particles.

14. The lithium secondary battery according to claim 9,
wherein the inorganic coating layer is formed on two surfaces of the porous polymer substrate.

15. A battery pack comprising the lithium secondary battery according to any one of claims 1 to 14.
